# EUROPEAN PATENT SPECIFICATION

(11) **EP 4 552 034 B1**
(45) Date of publication and mention of the grant of the patent: **10.06.2026**
(21) Application number: 23848765.6
(22) Date of filing: 29.12.2023
(51) Int. Cl.: G06F 21/62, H04L 9/40

(54) **DISTRIBUTED PRIVACY BUDGET SERVICE**
VERTEILTER PRIVATSPHÄRENBUDGETDIENST
SERVICE DE BUDGET DE CONFIDENTIALITÉ DISTRIBUÉ

(30) Priority: 31.12.2022 US 202263478140 P
(43) Date of publication of application: 14.05.2025
(73) Proprietor: GOOGLE LLC, Mountain View CA 94043 (US)
(72) Inventor: CELA, Carlos, Mountain View, CA 94043 (US); TOBLER, John, Mountain View, CA 94043 (US); PATEL, Chanda, Mountain View, CA 94043 (US); MANII, Esfandiar, Mountain View, CA 94043 (US); SAXENA, Shobhit, Mountain View, CA 94043 (US); SINGH, Vikas, Kumar, Mountain View, CA 94043 (US); REVERE, Paul, Mountain View, CA 94043 (US); GOH, Eugene, Mountain View, CA 94043 (US); GIRI, Chandan, Mountain View, CA 94043 (US)
(74) Representative: Marks & Clerk GST
(86) International application number: PCT/US2023/086508
(87) International publication number: WO 2024/145624

(56) References cited:
- US-A1- 2019 318 121
- RYAN ROGERS ET AL: "LinkedIn's Audience Engagements API: A Privacy Preserving Data Analytics System at Scale", ARXIV.ORG, CORNELL UNIVERSITY LIBRARY, 201 OLIN LIBRARY CORNELL UNIVERSITY ITHACA, NY 14853, 16 November 2020 (2020-11-16), XP081813698

## Description

### CROSS-REFERENCE TO RELATED APPLICATION

This application claims priority to and the benefit of the filing date of provisional U.S. Patent Application No. 63/478,140, titled "Distributed Privacy Budget Service," filed on December 31, 2022.

### FIELD OF THE DISCLOSURE

This disclosure relates to enforcing privacy budgets and, more particularly, to techniques for distributing privacy budget monitoring for improved security and enhancement of differential privacy.

### BACKGROUND

The background description provided herein is for the purpose of generally presenting the context of the disclosure. Work of the presently named inventors, to the extent it is described in this background section, as well as aspects of the description that may not otherwise qualify as prior art at the time of filing, are neither expressly nor impliedly admitted as prior art against the present disclosure.

Some services collect data related to user behavior and user interactions with electronic resources. This data may contain personal identifiable information (PII), and the services may analyze this data to generate reports and metrics. For instance, a service may aggregate records containing data from multiple users and analyze the aggregated records to produce a combined report. Even if the service or operator redacts the data to remove PII, this type of analysis can still be vulnerable to security risks.

For example, if a service that operates on user input data does not maintain differential privacy, a malicious actor could retrieve user input data based on the output of the service. Differential privacy refers to a mathematically-provable guarantee that the information of individual users is protected. A set of analysis results can be considered differentially private if no single user's data (i.e., input data) can be traced back from the analysis results (i.e., output data).

There is a class of differential privacy attacks in which several batches of records can be crafted, where each new batch is generated by adding or removing a small number of records, and sending these batches to a service for processing. By knowing some metadata of the records (e.g., Internet Protocol (IP) address where the record originated) and understanding the aggregation algorithm, analysis of reports produced by these crafted batches can yield private information contained in some records. This class of differential privacy attacks relies on reusing the same records over and over to produce multiple insights that can later be compared and analyzed.

Accordingly, there is a need for improved techniques for analyzing records in a manner that enforces the differential privacy of the output.

Document "Linkedln's Audience Engagements API: A Privacy Preserving Data Analytics System at Scale", by RYAN ROGERS ET AL (ARXIV.ORG, CORNELL UNIVERSITY LIBRARY, 201 OLIN LIBRARY CORNELL UNIVERSITY ITHACA, NY 14853, 16 November 2020 (2020-11-16), XP081813698) discloses a solution to manage a differential privacy budget controlling the analysis of a data set.

Document US 2019/318121 Al discloses a system to manage different data privacy budgets in parallel and independently from one another.

### SUMMARY

An example embodiment of these techniques is a method in one or more servers for managing privacy budgets. The method may include receiving a request to analyze a dataset, the dataset associated with a privacy budget representing a number of times the dataset can be analyzed; transmitting a first request to a first server implementing a first privacy budget service to verify whether there is sufficient privacy budget to analyze the dataset, the first privacy budget service maintaining a first instance of the privacy budget associated with the dataset; transmitting a second request to a second server implementing a second privacy budget service to verify whether there is sufficient privacy budget to analyze the dataset, the second privacy budget service independent from the first privacy budget service and the second privacy budget service maintaining a second instance of the privacy budget associated with the dataset; receiving, from the first server, a first response indicating whether there is sufficient privacy budget, according to the first privacy budget service; receiving, from the second server, a second response indicating whether is sufficient privacy budget, according to the second privacy budget service; and processing, based on the first response and the second response, the dataset.

Another example embodiment is a method in one or more servers for managing privacy budgets. The method may include receiving a plurality of datasets, each dataset of the plurality of datasets including encrypted data and metadata for the dataset; sorting the plurality of datasets into one or more groups based on the respective plurality of metadata included in the sufficient privacy budget for the group to store results of analysis of the group, the privacy budget for the group representing a number of times the group can be analyzed.

A further example embodiment is a computing system including one or more servers and a non-transitory computer-readable medium storing instructions thereon. When executed by the one or more processors, cause the computing system to implement any of the methods described above.

### BRIEF DESCRIPTION OF THE DRAWINGS

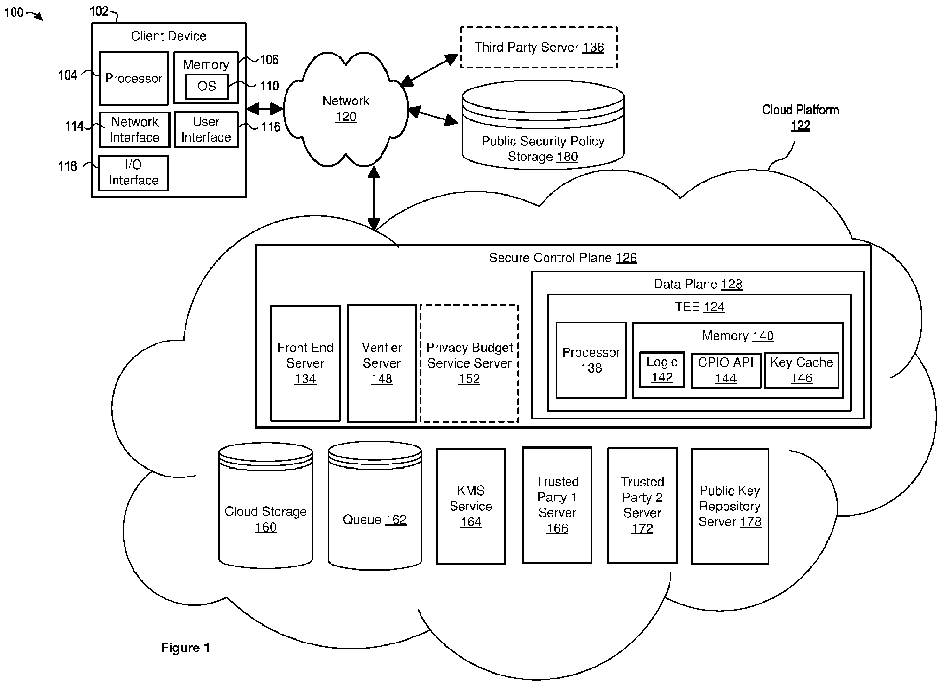

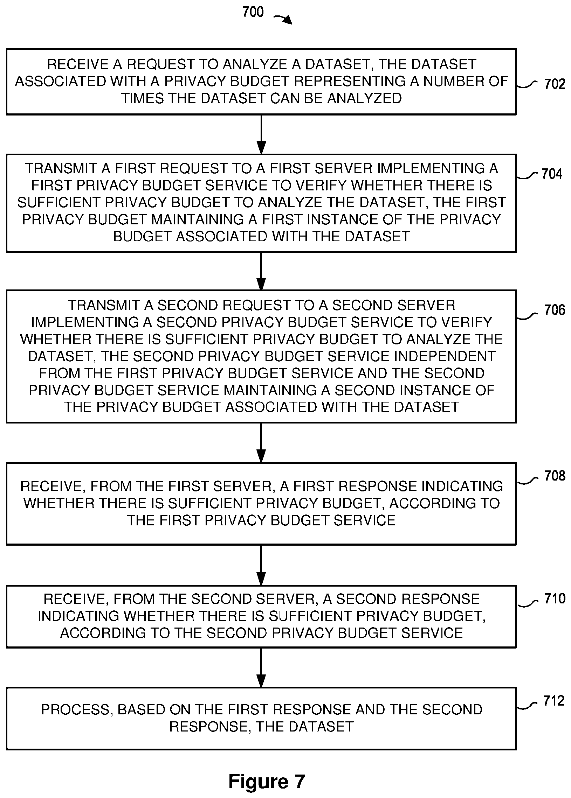

The invention as set out in the claims is mainly described with reference to figures 1 and 7. The other passages of the description provide useful context.
Fig. 1 is a block diagram of an example computing system in which the techniques of this disclosure can be implemented;
Fig. 2A is a block diagram illustrating an example computing architecture including a secure control plane and a data plane of this disclosure;
Fig. 2B is a block diagram illustrating another example computing architecture similar to Fig. 2A, except that Fig. 2B illustrates additional infrastructure for managing cryptographic keys and privacy budget;
Fig. 3 is a messaging diagram illustrating an example scenario in which the control plane of Figs. 2A-2B receives a request to perform a computation using the logic executing on the data plane;
Fig. 4 is a block diagram illustrating an example technique of grouping records and allocating privacy budget on a per-group basis;
Fig. 5 is a messaging diagram illustrating an example scenario in which records are grouped, privacy budget is allocated on a per-group basis, and privacy budget is verified by a distributed privacy budget service;
Fig. 6 is a flow diagram illustrating an example method for managing privacy budgets on a per-group basis; and
Fig. 7 is a flow diagram illustrating an example method for managing privacy budgets using a distributed privacy budget service.

### DETAILED DESCRIPTION OF THE DRAWINGS

A service of this disclosure implements techniques for mitigating differential privacy attacks. According to one example technique, the service prevents records from being reused in multiple batches. The service accomplishes this task by monitoring which records have been used, and allocating a budget, referred to as a privacy budget, to each of these records. Every time the record is used in a batch that is processed, the service decrements the privacy budget. For example, if a privacy budget is '2' for record N, the record N can be used within batches that are processed only two times. After a record is used in a batch and processed by a service, the service decrements its budget by one. The service will then refuse processing of any batch containing record N.

In some implementations, the service further optimizes this technique by tracking privacy budget on a per-batch basis rather than a per-record basis. For example, a service may process trillions of events each day. Keeping track of a privacy budget on a per-record basis can therefore be inefficient. To reduce the computational resources needed to monitor the privacy budgets for a set of records, the service can divide a set of records into "buckets" or groups, and allocate privacy budgets to each group. Such groups can be defined, for example, by a time scope and a sender. An example group may include "all records sent by sender X from 9 AM to 10 AM." The service then can allocate a privacy budget to this example group, and decrement the budget any time the example group is processed, including any time a batch of records including the group is processed. This optimization allows for efficient processing of large volumes of records with minimal overhead, while maintaining differential privacy.

A second example technique is to distribute privacy budget operations. A service that analyzes records may call an outside privacy budget service, operated by a trusted party, to verify that there is privacy budget available to process a record or a group of records. However, if a single trusted party operates this privacy budget service, there is opportunity for such a trusted party to tamper with the privacy budget. To address this potential vulnerability, trust can be delocalized by distributing a privacy budget service across more than one operator. Instead of a single trusted party, there may be N independent co-owners of the privacy budget (i.e., multiple trusted parties). Each trusted party can implement an instance of the privacy budget service, where each of these instances has a copy of the entire privacy budget. To consume budget, a service analyzing records can be required to execute an atomic transaction across all of these instances, where "atomic" refers to the condition that all instances must verify the privacy budget, or the process cannot move forward. A transaction can only proceed if all the privacy budgets are consistent across all of these instances. Thus, if a trusted party tampers with its privacy budget, the transaction will fail. Distributing the privacy budget service thus decreases the likelihood that the privacy budget will be tampered with, as all trusted parties implementing instances of the privacy budget must collude to modify the privacy budget.

### Example Computing Environment

In some embodiments, the techniques discussed above can be implemented using a secure control plane (SCP), which in turn provides an isolated secure execution environment for a data plane (DP). Any arbitrary business logic (such as any logic for analyzing batches of records) can execute within the DP, and all sensitive data traversing the SCP and entering the DP is encrypted. It should be understood that while the examples provided in this disclosure primarily describe the techniques for managing privacy budgets as performed using the SCP architecture, the techniques described herein can be implemented using any suitable computing environment.

The SCP described herein provides a non-observable secure execution environment where a service can be deployed. In particular, arbitrary business logic (e.g., code for an application) providing the service can be executed within the secure execution environment in order to provide the security and privacy guarantees needed by the workflow, with no computation at runtime observable by any party. The state of the environment is opaque even to the administrator of the service, and the service can be deployed on any supported cloud.

As one example, two clients producing data, client 1 and client 2, may wish to combine the data streams they receive from their respective customers, such that the clients can generate quantitative metrics related to these customers, where the quantitative metrics cannot be derived from their individual datasets. As a more particular example, client 1 can be a retailer that has data indicative of customer transactions, and client 2 can be an analytics engine capable of measuring the effectiveness of advertisement campaigns for products offered by the retailer, for example.

Client 2 may provide a service with algorithms that client 2 claims will perform data analysis securely. However, the client 1 may not wish to expose its customer data to client 2 in a manner that would potentially allow the data to be exfiltrated or used in a manner that does not adhere to privacy and security guarantees of client 1. Client 1 therefore would like to ensure that (1) its customer data cannot be exfiltrated by client 2 or any other party, and (2) the logic being used to analyze the customer data adheres to the security requirements of client 2. The techniques disclosed herein provide a secure execution environment in which the business logic executes, such that sensitive data analyzed by the business logic remains encrypted everywhere except within the secure execution environment, and provide attestation such that any party can ensure that the logic running within the secure execution environment performs as guaranteed.

Generally speaking, the service performing the computation (i.e., processing an event or request using business logic) is split between a data plane (DP) and a secure control plane (SCP). The business logic specific for the computation is hosted within the DP, where the DP is within a Trusted Execution Environment (TEE), also referred to herein as an enclave. The business logic may be provided to the DP as a container, where a container is a software package containing all of the necessary elements to run the business logic in any environment. The container may, for example, be provided to the SCP by the business logic owner. Functionally, the SCP provides a secure execution environment and facilities to deploy and operate the DP at scale, including managing cryptographic keys, buffering requests, keeping track of the privacy budget, accessing storage, orchestrating a policy-based horizontal autoscaling, and more. The SCP execution environment isolates the DP from the specifics of the cloud environment, allowing for the service to be deployed on any supported cloud vendor without changes on the DP. Both DP and SCP work together by communicating through an Input/Output (I/O) Application Programming Interface (API), also referred to herein as a Control Plane I/O API, or CPIO API.

In an example implementation, all data traversing the SCP is always encrypted, and only the DP has access to the decryption keys. For example, the SCP can facilitate a trusted data exchange, in which data from multiple parties, which may not trust each other, can be joined, but where none of these multiple parties has access to the keys for decrypting this data. Further, the decryption keys, when outside the DP, may be bit-split, such that only the DP can assemble the decryption keys within the TEE. Depending on the desired application, the output from the DP can be redacted or aggregated in such a way that the output can be shared and no individual user's data can be identified or exfiltrated.

The SCP provides several privacy, trust, and security guarantees. With regard to privacy, services using the SCP can provide guarantees that no stakeholder (e.g., a device operated by a client, the cloud platform, a third party) can act alone to access or exfiltrate cleartext (i.e., non-encrypted), sensitive information, including the administrator of the SCP deployment. Further, with regard to trust, the DP is running in a secure execution environment with a trusted state at the time the enclave is started. For example, the SCP may be implemented using technologies to guarantee process isolation in hardware either, including memory encryption and or memory address space segmentation, and a chain of trust from boot, using a Trusted Platform Module (TPM) or Virtual Trusted Platform Module (vTPM), in accordance with Secure Boot standards, and/or using a trusted and/or certified operating system (OS). Starting from an audited codebase and a reproducible build, cryptographic attestation is used to prove the DP binary identity and provenance at runtime to a key management service (KMS) which is configured to release cryptographic keys only to verified enclaves. As a result, any tampering of the DP image results in a system that is unable to decrypt any data. The cloud provider is implicitly trusted given the strong incentives the cloud provider has to guarantee its Terms of Service (ToS) guarantees. With regard to security, the secure execution environment is non-observable. The memory of the secure execution environment is encrypted or otherwise hardware-protected from access from other processes. Core dumps are not possible in an example implementation. All data is encrypted in transit and at rest, and all I/O from/to the DP is encrypted. No human has access to the private keys in cleartext (e.g., KMS is locked-down, keys are split, and keys are only available within the DP, which is within the secure execution environment.

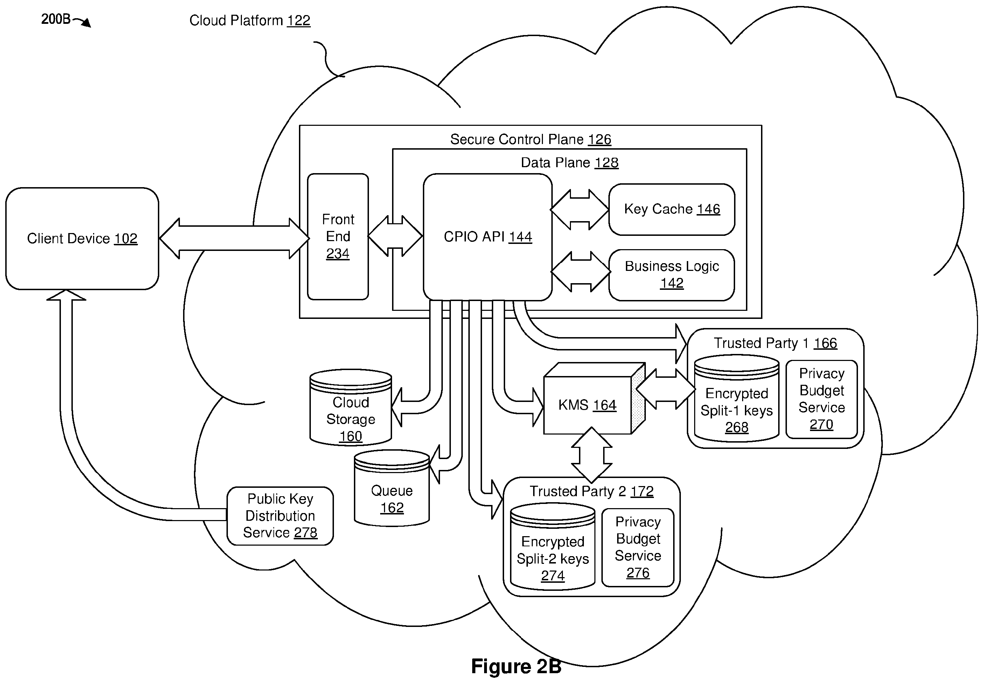

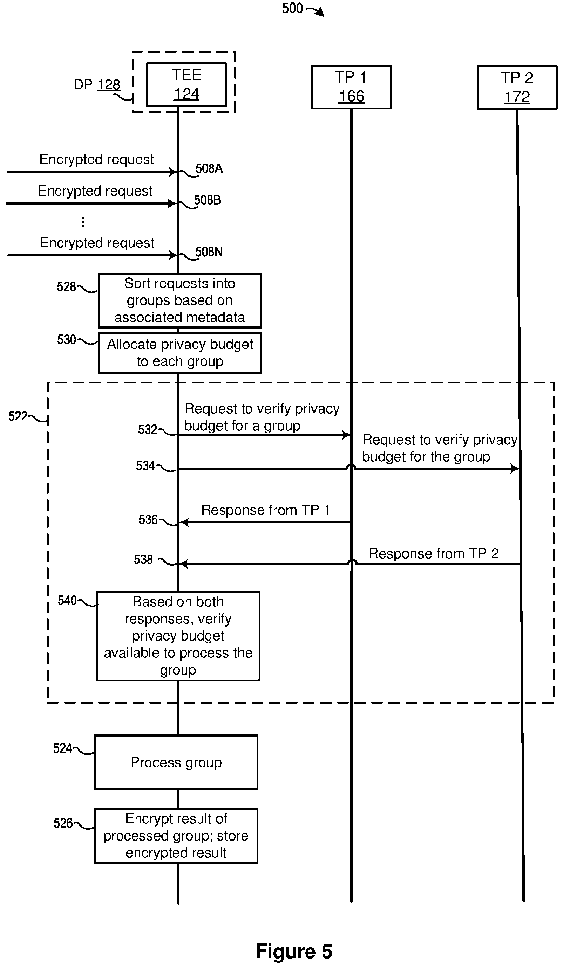

The SCP distributes trust in a way that three stakeholders need to cooperate in order to exfiltrate cleartext user event data. The SCP also uses the distributed trust model to guarantee that two stakeholders need to cooperate to tamper with the privacy budget service (described in more detail with reference to Figs. 2B and 5). Distributed trust is used for both event decryption and a privacy budget service. Regarding event decryption, the private key needed to decrypt events received at the SCP is generated in a secure environment and bit-split between at least two KMSs, each under the control of an independent Trusted Party. Each Trusted Party, for example, can further encrypt their respective key split with a KMS key owned by the Trusted Party in the cloud provider's KMS. The KMSs are configured to only release key material to a DP that matches a specific hash. If the DP is tampered with, the key splits will not be released. In such a scenario, the service can be launched but will not be able to decrypt any event. Similarly, the privacy budget service may be distributed between two independent Trusted Parties and may use transactional semantics to guarantee that both Trusted Parties' budgets match, which allows for the detection of budget tampering.

The SCP, as will be discussed with reference to Fig. 2B, also provides mechanisms for attesting that any business logic running on the DP corresponds to the publicly released code, allowing other parties to verify the business logic being used to analyze sensitive data. Generally speaking, the full codebase for the business logic is available to all stakeholders to examine and audit. Builds are reproducible, and any stakeholder can build the DP container. Building the DP container generates a set of cryptographic hashes (e.g., Platform Configuration Registers (PCRs)). All parties can therefore verify that the deployed products match the published codebase by comparing the hashes. The Trusted Parties publish the hashes to parties requesting to verify the built logic. KMSs, for example, are configured to only release key material to images matching the hashes generated from building the published logic. This guarantees that the private keys to decrypt sensitive information are only available to the images that correspond to a specific commit of a specific repository.

Turning to an example computing system that can implement the SCP of this disclosure, Fig. 1 illustrates an example computing system 100. The computing system 100 includes a client computing device 102 (also referred to herein as the client device 102), coupled to a cloud platform 122 (also referred to herein as the cloud 122) via a network 120. The network 120 in general can include one or more wired and/or wireless communication links and may include, for example, a wide area network (WAN) such as the Internet, a local area network (LAN), a cellular telephone network, or another suitable type of network or combination of networks. While the examples of this disclosure primarily refer to a cloud-implemented architecture, it should be understood that the techniques disclosed herein, including techniques for providing a secure execution environment in which to process sensitive data, for generating, splitting, and distributing keys, for managing privacy budgets, and for providing a mechanism by which to verify proprietary business logic, can be applied in non-cloud systems as well.

The client device 102 may be a portable device such as a smart phone or a tablet computer, for example. The client device 102 may also be a laptop computer, a desktop computer, a personal digital assistant (PDA), a wearable device such as a smart glasses, or other suitable computing device. The client device 102 may include a memory 106, one or more processors (CPUs) 104, a network interface 114, a user interface 116, and an input/output (I/O) interface 118. The client device 102 may also include components not shown in Fig. 1, such as a graphics processing unit (GPU). The client device 102 may be associated with a service user, who is an end user of the service provided by the SCP, discussed below. The end user operates the client device 102 (or, more specifically, the browser or application on the client device 102) that transmits requests/events to the service. To send a request or event to the service, the client device 102 encrypts the request/event using a public key, which the client device 102 can retrieve from a public key repository (e.g., a public key repository server 178). The client device 102 is exemplary only. As discussed below, the cloud platform 122 may receive incoming events and/or requests from the client device 102, from a browser/application/client process executing on the client device 102, or from another computing device issuing requests on behalf of the client device 102 or forwarding requests from the client device 102. Further, while only one client device is illustrated in Fig. 1, the computing system 100 may include multiple client devices capable of communicating with the cloud platform 122.

The network interface 114 may include one or more communication interfaces such as hardware, software, and/or firmware for enabling communications via a cellular network, a WiFi network, or any other suitable network such as the network 120. The user interface 116 may be configured to provide information, such as responses to requests/events received from the cloud platform 122 to the user. The I/O interface 118 may include various I/O components (e.g., ports, capacitive or resistive touch sensitive input panels, keys, buttons, lights, LEDs). For example, the I/O interface 118 may be a touch screen.

The memory 106 may be a non-transitory memory and may include one or several suitable memory modules, such as random access memory (RAM), read-only memory (ROM), flash memory, other types of persistent memory, etc. The memory 106 may store machine-readable instructions executable on the one or more processors 104 and/or special processing units of the client device 102. The memory 106 also stores an operating system (OS) 110, which can be any suitable mobile or general-purpose OS. In addition, the memory 106 can store one or more applications that communicate data with the cloud platform 122 via the network 120. Communicating data can include transmitting data, receiving data, or both. For example, the memory 106 may store instructions for implementing a browser, online service, or application that requests data from/transmits data to an application (i.e., business logic) implemented on the DP of a secure execution environment on the cloud platform 122, discussed below.

The cloud platform 122 may include a plurality of servers associated with a cloud provider to provide cloud services via the network 120. The cloud provider is an owner of the cloud platform 122 where an SCP 126 is deployed. While only one cloud platform is illustrated in Fig. 1, the SCP 126 may be deployed on multiple cloud platforms, even if those cloud platforms are operated by different cloud providers. The servers providing the cloud platform 122 may be distributed across a plurality of sites for improved reliability and reduced latency. Individual servers or groups of servers within the cloud platform 122 may communicate with the client device 102 and with each other via the network 120. Example servers that may be included in the cloud platform 122 are discussed in further detail below. While not illustrated for each server in Fig. 1, each server included in the cloud platform 122 may include one or more processors, similar to the processor(s) 104, adapted and configured to execute various software stored in one or more memories, similar to the memory 106. The servers may further include databases, which may be local databases stored in memory of a particular server or network databases stored in network-connected memory (e.g., in a storage area network). The servers also may include network interfaces and I/O interfaces, similar to the interfaces 114 and 118, respectively. Further, it should be understood that while certain components are described as an individual server, generally speaking, the term "server" may refer to one or more servers. Moreover, while functions are generally described as being performed by separate servers, some functions described herein may performed by the same server.

The cloud platform 122 includes the SCP 126, which includes a TEE 124. The TEE 124 is a secure execution environment where the DP 128 is isolated. A TEE, such as the TEE 124, is an environment that provides execution isolation and offers a higher level of security than a regular system. The TEE 124 may utilize hardware to enforce the isolation (referred to as confidential computing). The cloud provider is considered the root of trust of the SCP 126, abiding by the Terms of Service (ToS) agreement of the cloud platform 122. The hardware manufacturer of the servers providing the TEE 124 also have ToS guarantees, and therefore also provide additional layers of trust. The SCP 126 also utilizes techniques to guarantee that the state at boot time is safe, including using a minimalistic OS image recommended by the cloud provider, and using a TPM/vTPM-based secure boot sequence into that OS image.

One or more servers of the cloud platform 122 perform control plane (CP) functions (i.e., to support the SCP 126), and one or more servers perform data plane (DP) functions. For example, CP functions including key management and privacy budgeting services can be distributed across more than one Trusted Party. All functions of the DP 128 are carried out by processes within the TEE 124. Depending on the implementation, there may be more than one TEE per DP server. The TEE 124 may be deployed and operated by an administrator. The administrator can audit the logic to be implemented on the DP 128 and verify against a hash of the binary image to deploy the logic 142. On the CP, there may be a front end server or process 134 that receives external requests/event indications (e.g., from the client device 102), buffers requests/events until they can be processed by the DP 128, and forwards received requests to the DP 128. Generally speaking, as used herein, a request may also refer to an event or to a record, or may include one or more events or records, unless otherwise noted. The terms "record," "request," and "event" may be used interchangeably herein, unless otherwise noted. A request may include encrypted data (e.g., encrypted data representative of an interaction of the client device 102 with a website, application, or other online resource), as well as metadata for the request. The metadata may include a timestamp indicating a date and/or time that the request was generated. The metadata may also include other information depending on the nature of the data, such as an indication of a source of the request or an indication where results of processing the data should be outputted. For example, if the request was generated based on the client device 102 interacting with an online advertisement of an advertiser that is placed on an online resource published by a publisher, the metadata may include a domain of the advertiser and/or a domain of the publisher, or other indication of the advertiser and/or publisher.

In some implementations, there is a third party server 136 between the client device 102 and the SCP 126. The third party server 136 (which may include one or more servers, and might or might not be hosted on the cloud platform 122) may be responsible for receiving requests (which are encrypted by the client device 102) from the client device 102 and later dispatching the encrypted requests to the SCP 126. In some cases, the third party is the administrator of the service. The third party server 136 does not have keys with which to decrypt the requests. The third party server 136 may, for example, aggregate requests into batches and store the batches (e.g., on cloud storage 160). The third party server 136 or cloud storage server 160 may notify the front end server 134 that requests are ready to be processed, and/or the front end server 134 may subscribe to notifications that are pushed to the front end server 134 when batches are added to the cloud storage 160.

The DP 128 includes a server (which may include one or more servers), which includes one or more processors 138 (similar to the processor(s) 104), and one or more memories 140 (similar to the memory 106). The memory 140 includes business logic 142 (also referred to as the logic 142), which may be executed by the processor 138. The business logic 142 is for implementing whichever application or service is being deployed on the TEE 124. The memory 140 also may store a key cache 146, which stores cryptographic keys for encrypting and decrypting communications. Further, the memory 140 includes a CPIO API 144, which includes a library of functions for communicating with other elements of the cloud platform 122, including components on the CP of the SCP 126. The CPIO API 144 can be configured to interface with any cloud platform provided by cloud provider. For example, in a first deployment, the SCP 126 may be deployed to a first cloud platform provided by a first cloud provider. The DP 128 hosts the particular business logic 142, and the CPIO API 144 facilitates communications between the logic 142 and the first cloud platform. In a second deployment, the SCP 126 may be deployed to a second cloud platform provided by a second cloud provider. The DP 128 can host the same business logic 142 as the first deployment, and the CPIO API 144 is configured to facilitate communications between the logic 142 and the second cloud platform. Thus, the SCP 126 can be deployed to different cloud platforms without editing the underlying business logic 142, and only configuring the CPIO API 144 to interface with the particular cloud platform.

There may be additional CP-level services provided by servers of the cloud platform 122 that support the SCP 126. For example, a verifier server 148 may provide a verifier module capable of verifying whether the business logic 142 conforms to a security policy. While not explicitly illustrated in Fig. 1, the verifier module can operate within the TEE 124. As another example, a privacy budget service server 152 may implement a privacy budget service that verifies whether the privacy budget for a user or device has been exhausted. One or more privacy budget services, additionally or alternatively, may be implemented by Trusted Parties, as discussed with reference to Fig. 2B.

Additionally, the cloud platform 122 may include other servers and databases in communication with the SCP 126, as described in the following paragraphs. These servers may facilitate the CP functions of the SCP 126. In particular, CP functions may be distributed across several servers, as will be discussed below. Processes of the DP 128, however, remain within the TEE 124 and are not distributed outside of the TEE 124.

Cloud storage 160 may store encrypted batches of requests, as mentioned above, before the encrypted batches are received by the front end server 134. The cloud storage 160 may also be used to store responses, after the DP 128 has processed a received request, or to perform storage functions of other components of the cloud platform 122. Queue 162 may be used by the front end server 134 to store pending requests before they can be analyzed by the DP 128. For example, after receiving a request from the client device 102, the front end server 134 can receive the request and temporarily store the pending request in the queue 162 until the DP 128 is ready to process the request. As another example, after receiving a notification that a batch of requests from the third party server 136 is stored within the cloud storage 160, the front end 134 can retrieve the batch and place the batch in the queue 162 where the batch awaits analysis by the DP 128.

The KMS service 164 provides a KMS, which generates, deletes, distributes, replaces, rotates, and otherwise manages cryptographic keys. The functions of the KMS 164 may be executed by one or more servers. Thus, the KMS 164 may be a cloud KMS. The Trusted Party 1 server 166 and the Trusted Party 2 server 172 are servers associated with a Trusted Party 1 and a Trusted Party 2, respectively, that provide the functionality of each Trusted Party. While Fig. 1 illustrates only two Trusted Parties, the cloud platform 122 may include multiple Trusted Parties. Each Trusted Party may manage an instance of the privacy budget (as described in further detail with reference to Fig. 2B and 5), and can also audit the logic 142 implemented on the DP 128 to verify the build product against the hash of the published logic. Trusted Parties own the creation and management of the asymmetric keys used for encryption and decryption of user data. The Trusted Parties may securely generate keys and publish public keys to the world. Private keys can be bit-split into two parts (one split under the control of each Trusted Party, although any number of N-splits can also be supported, e.g., in the case where there are N Trusted Parties). An envelope-encryption technique may be used in which each Trusted Party encrypts its split for each key with a KMS's symmetric key and saves the encrypted split in their repository. Envelope encryption allows for rotation of the envelope without necessarily rotating the key within the envelope. Public keys may be stored and managed by a public key repository server 178. Additionally or alternatively, the KMS server 164 may manage public keys.

The computing system 100 may also include public security policy storage 180, which may be located on or off the cloud platform 122. The public security policy storage 180 stores security policies such that the security policies are accessible by the public (e.g., by the client device 102, by components of the cloud platform 122). A security policy (also referred to herein as a policy) describes what actions or fields are allowed in order to compose the output of a service. A policy can also be described as a machine-readable and machine-enforceable Privacy Design Document (PDD).

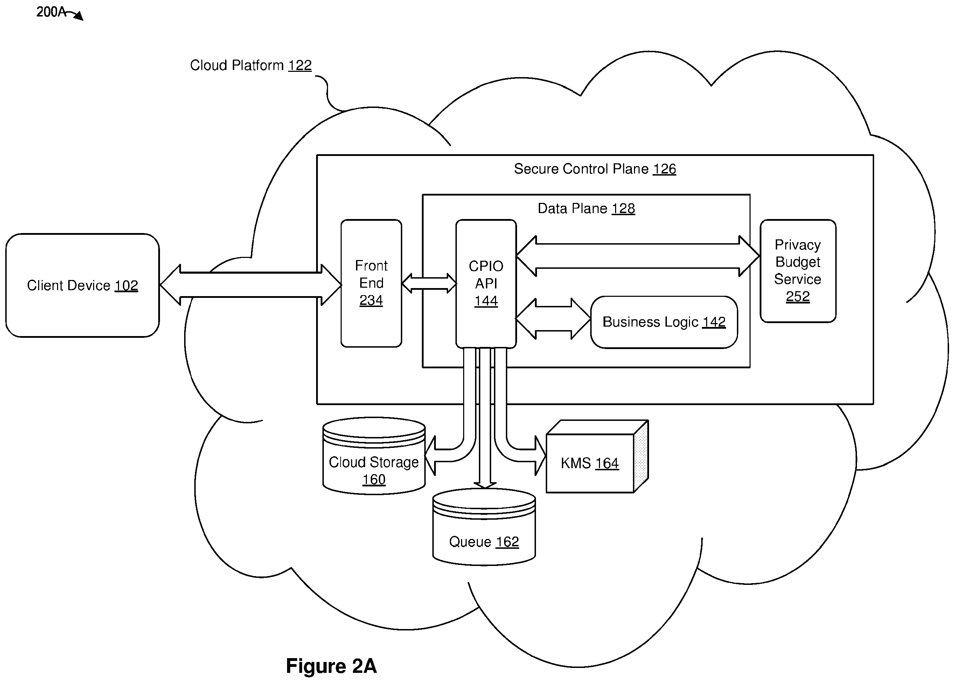

Referring next to Fig. 2A, an example architecture 200A is illustrating depicting connections between components and software elements of the computing system 100. The client device 102 can retrieve public keys (e.g., from the public key repository server 178) in order to address requests to the service being implemented on the DP 128 (i.e., by the business logic 142). For example, the client device 102 may initiate a request to access content provided by the service, or may issue an event including user behavior data.

Encrypted requests from the client device 102 are received first by a front end module 234 (i.e., a module implemented by the front end server 134) of the SCP 126. In some implementations, the requests are first received by a third party that batches the requests before notifying the front end 234 (or causing the front end 234 to be notified). The notification to the front end 234 may contain the location within the cloud storage 160 (e.g., the location of a cloud storage bucket) where the encrypted requests reside, and may contain an indication of where output from the DP 128 should be outputted (e.g., by including metadata indicating such information). In such cases, the front end 234 may retrieve the encrypted requests from the cloud storage 160. In any event, the front end 234 passes encrypted requests to the DP 128 using functions defined by the CPIO API 144. The front end 234 may store encrypted requests in the queue 162 until the DP 128 is ready to process the requests and retrieves the requests from the queue 162. The DP 128 decrypts the requests and processes the requests in accordance with the business logic 142. Decrypting the requests may include communicating with the KMS 164 (e.g., a cloud KMS implemented by distributed servers) to retrieve and assemble private keys for decrypting the requests, and/or with Trusted Parties, as in Fig. 2B. These are examples of integration of cloud native services with the SCP 126, but the idea extends to other cloud infrastructure and services, with the SCP 126 mediating between these services and the business logic 142 by using the CPIO API 144 for translating the semantics to make the business logic 142 agnostic of the specific cloud environment.

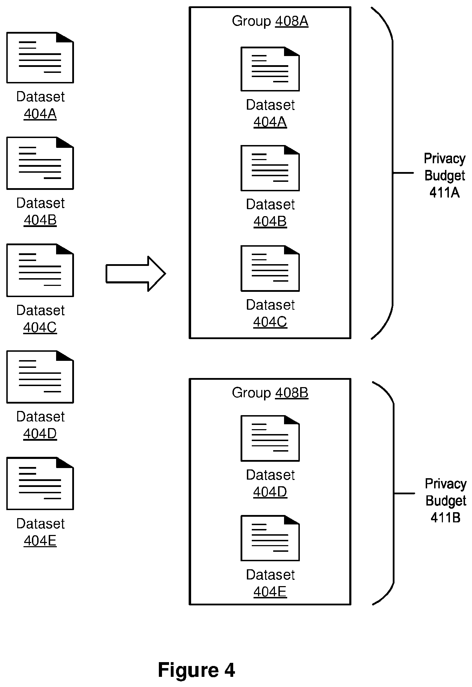

Processing the requests may include communicating with a privacy budget service 252 (e.g., implemented by the privacy budget service server 152), using the CPIO API 144 functions, to check the privacy budget and ensure compliance with the privacy budget. The privacy budget keeps track of requests and events that have been processed. There may be a maximum number of requests originating from a specific user, for example, that can be processed during a particular computation or period. Ensuring compliance with a privacy budget prevents parties analyzing the output from the DP 128 from extracting information regarding a specific user. By checking compliance with the privacy budget, the DP 128 provides a differentially private output. As will be discussed with reference to Figs. 4-5, a privacy budget may be allocated to a group of requests, such that the group of requests can only be processed a maximum number of times.

The results from processing the requests can be encrypted by the DP 128, and can be redacted and/or aggregated such that the output does not reveal information concerning specific users. The DP 128 can store the results in, for example, the cloud storage 160, where the results can be retrieved by parties having the decryption key for the results. As one example, if processing results for the third party server 136, the DP 128 can encrypt the results using a key that the third party server 136 can decrypt.

Turning to Fig. 2B, an architecture 200B is similar to the architecture 200A, except that additional details are illustrated regarding key management and privacy budget. In comparison to Fig. 2A, Fig. 2B also illustrates the Trusted Party 1 server 166 (referred to herein as Trusted Party 1 166 for brevity), the Trusted Party 2 server 172 (referred to herein as Trusted Party 2 172 for brevity), and the public key distribution service 278. The public key distribution service 278 provides public keys to the client device 102, which the client device 102 can use to address requests to the DP 128, front end 234, or third party server 136 that aggregates requests (not shown in Fig. 2B). The public key distribution service 278 may be operated by the public key repository server 178, or by the KMS server 164. The Trusted Party 1 166 includes a key cache 268 containing encrypted split-1 keys (i.e., an encrypted first portion of a private key), whereas the Trusted Party 2 172 includes a key cache 274 containing encrypted split-2 keys (i.e., an encrypted second portion of the private key). Each of the Trusted Parties 166, 172 may also provide a privacy budget service 270, 276, and may each manage an instance of the privacy budget. Distributing management of the privacy budget to two Trusted Parties helps to ensure that no one Trusted Party can tamper with the privacy budget. Both privacy budget services 270, 276 should enforce the same privacy budget; thus, if the two services return different outputs, the SCP 126 can recognize that one of the Trusted Parties 166, 172 has tampered with the privacy budget. The architecture illustrated in Fig. 2B prevents any one Trusted Party from having total control over private decryption keys or the privacy budget. A single Trusted Party cannot act alone to provide unlimited budget to any user, and therefore a single Trusted Party cannot aggregate the same batch of data repeatedly.

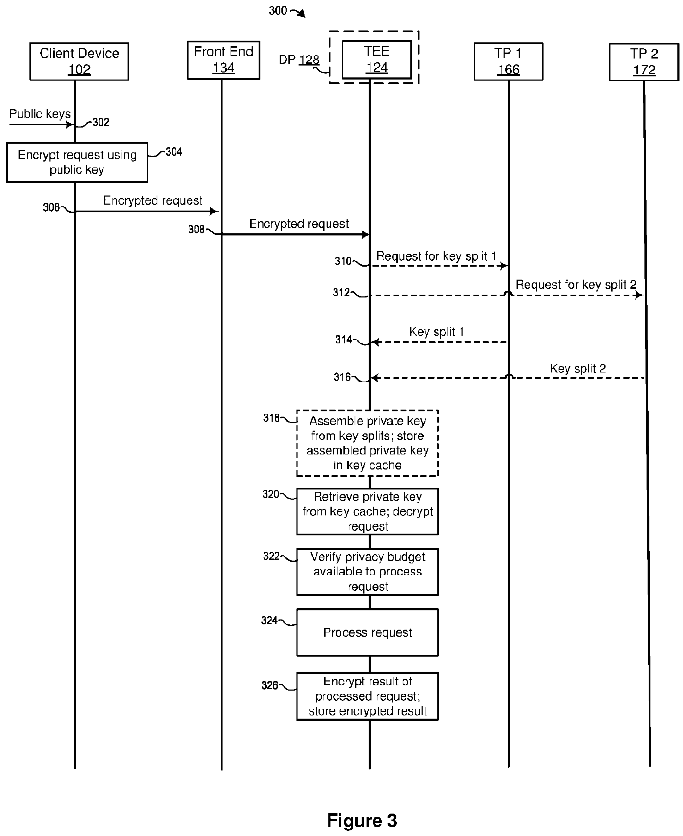

The elements illustrated in the architecture 200B can implement the actions illustrated in Figs. 3 and 5.

### Example Scenario including Split Keys

During an example scenario 300, illustrated in Fig. 3, the client device 102 retrieves 302 public keys from a public key distribution service 278 (which may be implemented by the public key repository server 178, or may be provided by the KMS 164). The client device 102 encrypts 304 a request for the service implemented on the TEE 124 using a public key associated with the service. The client device 102 then sends 306 the encrypted request to the front end server 134. As explained previously, in some implementations, the third party server 136 receives the encrypted request before the request reaches the front end server 134, and stores the encrypted request in the cloud storage 160, where the encrypted request can be retrieved by the front end server 134. The front end server 134 passes 308 the encrypted request to the DP 128. The business logic 142 retrieves the encrypted request for processing, and attempts to retrieve the decryption key from the key cache 146. If the business logic 142 retrieves the decryption key, the scenario continues from event 308 to event 320.

As a more specific example applicable to the scenarios illustrated in Figs. 3 and 5, the service implemented on the TEE 124 may be an aggregation service. An encrypted request in this case may include an event detected by an API implemented on the client device 102. Each event may be a conversion, where a conversion may correspond to the client device 102 interacting with an advertisement provided by a publisher. The aggregation service may be a service configured to provide a summary report, which provides aggregated statistics from events in client software (e.g., a browser, application, or process implemented by the client device 102). Thus, in such an example, the business logic 142 may include performing event aggregation and outputting an output report.

Referring back to Fig. 3, if the decryption key is not present in the key cache 146, the business logic 142 requests, using the CPIO API 144, the decryption key. More particularly, the DP 128 sends 310 a request for key split 1 to the Trusted Party 1 166, and sends 312 a request for key split 2 to the Trusted Party 2 172. In response, the Trusted Party 1 166 sends 314 the key split 1 to the DP 128, and the Trusted Party 2 172 sends 316 the key split 2 to the DP 128. The key splits 1 and 2 may be encrypted when received 314, 316 by the DP 128 with symmetric keys generated by the Trusted Party 1 166 and the Trusted Party 2 172, respectively. Accordingly, the DP 128 may also need to request decryption of the key splits by, for example, the KMS 164 (i.e., a cloud KMS), which may store the symmetric keys operated by the Trusted Parties 166, 172.

Before sending 314 and 316 the key splits to the DP 128, the Trusted Parties 166, 172 may first verify that the business logic 142 corresponds to the code publicly released on a commit of a code repository. This can be accomplished through attestation. The codebase of the business logic 142 is available to all stakeholders (the client device 102, the Trusted Parties 166, 172, the cloud platform 122, the administrator, third parties, etc.) to examine and audit. As discussed above, any stakeholder can build the DP container including the business logic 142 and generate PCRs for the published logic. Thus, any party can verify that the business logic 142 built and deployed on the DP 128 matches the published codebase by comparing PCRs of the deployed business logic 142 against PCRs of the published codebase. The CPIO API 144 can communicate PCRs of the deployed business logic 142 to other parties (i.e., to the client device 102, to other components of the cloud platform 122 or the computing system 100) to attest that the deployed business logic 142 corresponds to the released codebase and has not been altered.

Thus, in the requests 310, 312 that the DP 128 transmits, the business logic 142 can include, using the CPIO API 144, the PCRs for the deployed business logic 142. Alternatively or in addition, the Trusted Parties 166, 172 can request the PCRs. The Trusted Parties 166, 172 can then confirm that the deployed images match the PCRs of the published codebase. After performing this verification process, the Trusted Parties 166, 172 can release 314, 316 the key splits to the DP 128. Likewise, the KMS 164 can also verify that the binary image deployed on the DP 128 is attested, and release symmetric decryption keys only to attested DP binaries running in the TEE 124.

The business logic 142 then assembles 318 the private decryption key from the key splits, and can store the assembled private key in the key cache 146. Assembly of the private key occurs only in the TEE 124, and the CPIO API 144 utilizes a secure channel and authentication when communicating with the Trusted Parties 166, 172. Since each Trusted Party 166, 172 contains only part of each key, whole private keys only exist within the secure TEE 124 after the key splits are combined. Thus, this prevents any single party from exfiltrating cleartext data or private keys. The business logic 142 retrieves 320 the private key from the key cache 146 and uses the private key to decrypt the request. Before processing the request, the business logic 142 may verify 322 that there is privacy budget available to process the request. The business logic 142 may perform such verifications by communicating with the privacy budget service 270, 272, and/or 154, in accordance with the CPIO API 144. Verifying that there is sufficient privacy budget available to process the request may include sending requests to both Trusted Party 1 166 and Trusted Party 2 172, each managing an instance of the privacy budget, as will be discussed with reference to Fig. 5.

Provided there is sufficient privacy budget, the business logic 142 can then process 324 the request. Before storing 326 the result of the processing, the business logic 142 in some cases checks again whether privacy budget is still available. Depending on the implementation, the privacy budget may be checked before processing the request (as illustrated in Fig. 3), after processing the request and before storing the result of the processing, or both before processing the request and before storing the result of the processing. The business logic 142 can then 326 encrypt and store the result for later retrieval. For encryption, the business logic 142 can either use a system-provided or a Customer-Managed Encryption Key (CMEK) for encryption at rest. The result is then ready for retrieval and consumption by any party possessing the CMEK key (e.g., the administrator, the client device 102, the third party server 136, etc.).

### Example Scenario including Privacy Budgeting on Per-Group Basis and Distributed Trust

Turning to Fig. 4, a block diagram illustrates an example technique for grouping records and allocating privacy budget on a per-group basis. The TEE 124 may receive several datasets 404A-404E, either individually or within one or more batches. The TEE 124 may receive the datasets from the client device 102, as illustrated in Fig. 3, or from the third party server 136, via the front end 134. Each dataset, for example, may include the encrypted request discussed above with reference to event 306. Accordingly, each dataset may include encrypted data (e.g., representative of an interaction of the client device 102 with an online resource) and metadata associated with the encrypted data. The metadata may also be included within the encrypted data. As used herein, "datasets" may correspond to the "requests," "reports," and "events" discussed above. Further, as noted above, the metadata may a timestamp indicating a date and/or time that the dataset was generated. The metadata may also include other information depending on the nature of the data, such as an indication of a source of the dataset or an indication where results of processing the data should be outputted. For example, if the request was generated based on the client device 102 interacting with an online advertisement of an advertiser that is placed on an online resource published by a publisher, the metadata may include a domain of the advertiser and/or a domain of the publisher, or other indication of the advertiser and/or publisher. The metadata or a portion of the metadata may be included in cleartext (i.e., not encrypted).

To reduce the computational resources needed to monitor the privacy budget of each dataset 404A-E, the TEE 124 can sort the datasets 404A-404E into groups, and allocate a privacy budget to each group rather than to each individual dataset 404A-E. The metric(s) used for sorting the datasets 404A-E can vary depending on implementation. Generally speaking, the sorting may be based on the metadata included in each dataset 404A-E. In one example, the sorting may be based on timestamps included in the metadata. An example timestamp may indicate both a time and data, such as 2021-01-01 12:29:33AM. To group the datasets, the timestamps may be floored to the hour (e.g., by flooring the example timestamp 2021-01-01 12:29:33AM to 2021-01-01 12:00:00AM). As another example, the sorting may be based on the publisher domain and/or advertiser domain included in the metadata. In a further example, the sorting may be based on both the timestamp and the publisher domain and/or advertiser domain. In such an example, each group may include datasets from the same advertiser domain included in the same floored hour time window.

In the example of Fig. 4, the five datasets 404A-404E are sorted into two groups, group 408A and 408B based on the metadata included in each of the datasets 404A-E.. For example, if the datasets 404A-E are sorted based on timestamp and advertiser domain, the the datasets 404A-404C may have been generated during the same time window, from the same advertiser domain, and the datasets 404D and 404E may have been generated during a later time window, from the same advertiser domain. A first privacy budget 411A is then allocated to the group 408A, which includes datasets 404A-404C, and a second privacy budget 411B is allocated to the group 408B, which includes datasets 404D and 404E. The first privacy budget 411A and the second privacy budget 411B may be equal in magnitude. As will be further discussed with reference to Fig. 5, when the group 408A is analyzed, or included in a batch that is processed, the privacy budget 411A is decremented by a privacy budget service, which may be a distributed privacy budget service. Likewise, when the group 408B is analyzed, the privacy budget 411B is decremented. Before the group 408A is analyzed (e.g., processed using the business logic 142 as at event 324 in Fig. 3) and/or before analysis of the group 408A is stored, the TEE 124 can verify whether there is sufficient privacy budget to analyze and/or store analysis of the group 408A. This verification can be performed on a per-group basis, rather than a per-record basis, which reduces the computational resources needed to maintain differential privacy for multiple records.

To keep track of the privacy budget for each group, the TEE 124 can generate a privacy budget key for each group. A privacy budget key may be generated based on information included in the metadata, such as by hashing information included in the metadata. More particularly, a privacy budget key may be generated based on the information used to sort the datasets into groups, such that each group is assigned a unique privacy budget key. For instance, an example privacy budget key may be generated by hashing the advertiser domain, publisher domain, or both the advertiser domain and publisher domain. The example privacy budget key may also be generated based on the floored time window corresponding to the group (e.g., the hourly window on a particular date), or the privacy budget for a group may be tracked using a privacy budget key and an indication of the floored time window. In some implementations, the TEE 124 generates the privacy budget key for a group. In other implementations, the privacy budget key can be generated by an originator of the dataset, and included in the dataset. For example, if a dataset is generated based on a client device 102 interacting with a publisher, when the publisher generates the dataset for transmission to the TEE 124 for analysis, the publisher can hash information such as advertiser domain and/or publisher domain to generate the privacy budget key, and include the privacy budget key in the dataset. When the TEE 124 queries the privacy budget service(s) (e.g., the Trusted Party 1 166 and the Trusted Party 2 172) to determine whether there is sufficient privacy budget to process the dataset, the TEE 124 can include in the request the privacy budget key and, if not indicated by the privacy budget key itself, the time window.

Turning to Fig. 5, a scenario 500 depicts two techniques of this disclosure: allocating privacy budget on a per-group basis, and verifying a privacy budget utilizing a distributed privacy budget service. It should be understood that these techniques may be implemented independently of each other. For example, in one implementation, the TEE 124 may allocate privacy budget on a per-group basis, but rely on only a single trusted party to verify the privacy budget. In another implementation, the TEE 124 may allocate privacy budget on a per-record basis, but rely on multiple trusted parties to verify the privacy budget. In a further implementation, as illustrated in Fig. 4, the TEE 124 may both allocate privacy budget on a per-group basis and rely on multiple trusted parties to verify the privacy budget.

While not shown in Fig. 5, the scenario 500 may begin similarly to the scenario 300 (i.e., by including events similar to events 302, 304, 306, and 308. The DP 128 may receive 508A-508N multiple encrypted requests (i.e., datasets, as used in Fig. 4). The DP 128 can then analyze the metadata included in each of the encrypted requests to sort the encrypted requests into groups (e.g., similar to groups 408A, 408B). The DP 128 allocates 530 a privacy budget to each group. The privacy budgets for the different groups may be the same, such that each group has the same initial privacy budget. The privacy budget for each group may be a number N, where *N* may be an integer equal to 1 or greater. If the privacy budget is equal to *N =* 1, then the group may only be analyzed once before the privacy budget for the group is completely consumed.

While not shown in Fig. 5, the scenario 500 may also include events 310, 312, 314, 316, 318, and 320, as illustrated in Fig. 3.

Next, the DP 128 verifies 522 that there is sufficient privacy budget to process the group. Each of the Trusted Parties 166, 172 may implement a privacy budget service maintaining a respective instance of the privacy budget for the group. The first instance of the privacy budget maintained by the Trusted Party 1 166 should be the same as the second instance of the privacy budget maintained by the Trusted Party 2 172, as each of the Trusted Parties 166, 172 should enforce the same privacy budget for a given group. The Trusted Party 1 166 and the Trusted Party 2 172 can therefore be referred to as implementing a distributed privacy budget service. Each of the Trusted Parties 166, 172 are independent from each other (i.e., implemented on independent servers). Further, there is no requirement that the Trusted Parties 166, 172 be implemented on the same cloud platform; each can be implemented on a different cloud platform.

Verifying 522 the privacy budget may include transmitting 532 a request to the Trusted Party 1 166 to verify that, according to the Trusted Party 1 166, there is sufficient privacy budget to process the group, and transmitting 534 a request to the Trusted Party 2 172 to verify that, according to the Trusted Party 2 172, there is sufficient privacy budget to process the group. While illustrated in Fig. 5 as occurring sequentially (for clarity), the DP 128 may transmit 532, 434 the first and second requests simultaneously. Each request can include the privacy budget key (and the floored time window, if not indicated by the privacy budget key), so that each Trusted Party can keep track of to which group the request pertains. Each of the Trusted Parties 166, 172 can then check whether there is sufficient privacy budget to process the group, according to each of their respective instances of the privacy budget (i.e., check whether the privacy budget is at least 1). If there is sufficient privacy budget, according to the Trusted Party 1 166, then the Trusted Party 1 166 decrements its instance of the privacy budget. Likewise, if there is sufficient privacy budget, according to the Trusted Party 2 172, then the Trusted Party 2 172 decrements its instance of the privacy budget. The Trusted Party 1 166 sends 536 a response to the DP 128 indicating whether there is sufficient privacy budget, according to the Trusted Party 1 166, and the Trusted Party 2 172 sends 538 a response to the DP 128 indicating whether there is sufficient privacy budget, according to the Trusted Party 2 172.

Based on both responses, the DP 128 verifies 540 whether there is sufficient privacy budget to process the group. Both responses must match and indicate that there is sufficient privacy budget for the flow to continue. If the responses do not match, or one or both Trusted Parties 166, 172 indicate that there is insufficient privacy budget to process the group, then the flow is aborted, and the group is not analyzed (i.e., the flow does not continue to event 524 or 526). Verifying 522 that there is sufficient privacy budget to process the group may include events 532, 534, 536, 538, and 540. The DP 128 may communicate 532, 534, 536, 538 with the Trusted Parties 166, 172 in accordance with the CPIO API 144.

In the scenario 500, after verifying 522 that there is privacy budget available to process the group, the DP 128 can then process 524 the group (e.g., by analyzing the group using the business logic 142, similar to event 324. The DP 128 may analyze the group within a larger batch of requests, but enforces that each request included in a group is analyzed within the same group and, if applicable, the same batch. The DP 128 can then 526 encrypt and store the result of the analysis at event 524 for later retrieval, similar to event 326. While in the scenario 500, the DP 128 verifies 522 the privacy budget prior to analyzing 524 the group, in other scenarios, the DP 128 may analyze 524 the group and verify 522 the privacy budget prior to storing 526 the result. If there is insufficient privacy budget, then the DP 128 discards the result of the analysis at event 524 and does not store 526 the result.

The DP 128 and Trusted Parties 166 and 172 may perform additional operations, not shown in Fig. 5, to ensure that consumption of the privacy budget for a group occurs atomically, i.e., the privacy budget across all instances is either consumed or not consumed. For example, after verifying 522 that there is privacy budget available to process the group, the DP 128 may send a commit message to each of the Trusted Parties 166, 172 (e.g., simultaneously), to cause each of the Trusted Parties 166, 172 to decrement their respective instances of the privacy budget at the same time. The Trusted Parties 166, 172 can then send a notification to the DP 128 that the privacy budget instance for each Trusted Party 166, 172 has been successfully consumed. The DP 128 can then proceed with processing 524 the group or storing 526 the results of any analysis after confirmation of all instances of the privacy budget being successfully consumed. If such confirmation is not received from either Trusted Party 166, 172, then the process can be aborted.

### Example Methods for Privacy Budgeting on Per-Group Basis and Distributed Trust

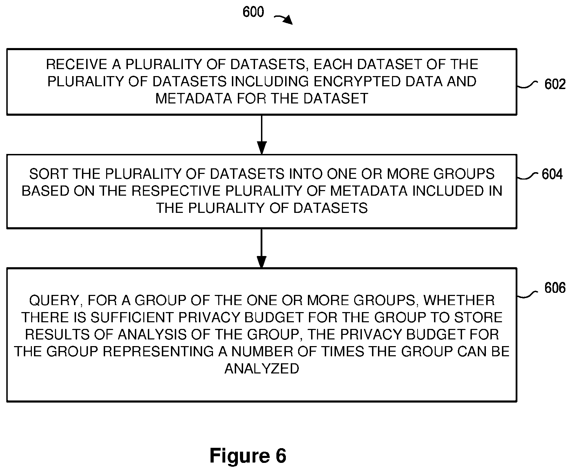

Fig. 6 is a flow diagram illustrating an example method 600 for managing privacy budgets on a per-group basis. The method 600 may be implemented by one or more servers (e.g., servers supporting the SCP 126). The method 600 may begin at block 602, where the server(s) receive a plurality of datasets (e.g., events 508A-508N). Each dataset may include encrypted data and metadata for the dataset. The encrypted data, for example, may be representative of an interaction, via the client device 102, of a user with an online resource (e.g., an advertisement or other interactive element of a browser or application).

At block 604, the server(s) sort the plurality of datasets into one or more groups based on the metadata included in each dataset (e.g., event 528). To each group, the server(s) can allocate a privacy budget, representing a number of times the group can be analyzed, such that privacy budgeting for the one or more groups is performed on a per-group basis rather than a per-request basis. The privacy budget for each group may be the same initial privacy budget. Sorting the datasets may include sorting based on timestamps included in the metadata for the datasets. The timestamps, for example, may be floored to the hour, such that each group corresponds to data received or generated during a particular hour window on a date.

At block 606, the server(s) query, for a group of the one or more groups, whether there is sufficient privacy budget for the group to store results of analysis of the group. In some implementations, the server(s) analyze, prior to querying, the datasets included in the group to produce an output (e.g., event 524). If, based on the querying, there is sufficient privacy budget for the group, then the server(s) store the output (e.g., event 526). If there is insufficient privacy budget for the group, then the server(s) refrain from storing the output and instead discard the output. In other implementations, the server(s) query whether there is sufficient privacy budget before analyzing the datasets in the group. If there is sufficient privacy budget, then the server(s) analyze the datasets included in the group and store the output of the analysis. If there is insufficient privacy budget, then the server(s) refrain from analyzing the datasets in the group. Upon or after analyzing the datasets, the server(s) decrement the privacy budget for the group, or cause the privacy budget to be decremented by notifying a privacy budget service (e.g., Trusted Party 1 166 and/or Trusted Party 2 172) to decrement the privacy budget. In some implementations, the privacy budget service decrements the privacy budget in response to receiving the request to verify whether there is available privacy budget for the group.

Querying whether there is sufficient privacy budget for a group may include transmitting (e.g., via an API call), to a privacy budget service (e.g., to the Trusted Party 1 166, the Trusted Party 2 172, or to both Trusted Parties 166, 172 in a scenario including a distributed privacy budget service) a request to consume the privacy budget for the group (e.g., event 322, event 522, 532, 534). The server(s) can then receive, from the privacy budget service, a response indicating whether there is sufficient privacy budget to consume the privacy budget for the group. In scenarios involving a distributed privacy budget service, the querying can include transmitting a first request to a first privacy budget service (e.g., the Trusted Party 1 166) to consume the privacy budget for the group (e.g., event 532), transmitting a second request to a second privacy budget service (e.g., the Trusted Party 2 172) to consume the privacy budget for the group (e.g., event 534), and receiving a first and second response from the first privacy budget service and the second privacy budget service, respectively (e.g., event 536, 538). The server(s) can determine, based on both responses, whether there is sufficient privacy budget. Both responses must match and indicate that there is sufficient privacy budget in order for the server(s) to proceed with analyzing, or storing the results of any analyzing, the datasets included in the group.

Further, the querying may including transmitting a request to a privacy budget service, where the request includes a privacy budget key representing the group. The privacy budget key may be generated by the server(s) based on metadata common to the group (e.g., advertiser domain, publisher domain, timestamp, depending on how the datasets were sorted into groups), such as by hashing at least a portion of the metadata. For example, the key may be generated based on hashing an indication in the metadata of a domain from which the set of datasets were received (e.g., a publisher domain where an advertisement was published and/or an advertiser domain of the advertisement).

Fig. 7 is a flow diagram illustrating an example method 700 for managing privacy budgets using a distributed privacy budget service. The method 700 may be implemented by one or more servers (e.g., servers supporting the SCP 126). The method 700 may begin at block 702, where the server(s) receive a request to analyze a dataset (e.g., event 308, 508A-508N). The dataset may include encrypted data and metadata for the dataset. The encrypted data, for example, may be representative of an interaction, via the client device 102, of a user with an online resource (e.g., an advertisement or other interactive element of a browser or application). Depending on the implementation, the server(s) may receive multiple datasets, and the request may be to analyze the multiple datasets. The dataset may be associated with a privacy budget representing a number of times the dataset can be analyzed.

At block 704, the server(s) transmit (e.g,, via an API call) a first request to a first server implementing a first privacy budget service (e.g., Trusted Party 1 166) to verify whether there is sufficient privacy budget to analyze the dataset (e.g., event 532). The first privacy budget service maintains a first instance of the privacy budget associated with the dataset. Likewise, at block 706, the server(s) transmit a second request to a second server implementing a second privacy budget service (e.g., Trusted Party 2 172), to verify whether there is sufficient privacy budget to analyze the dataset (e.g., event 534). The second privacy budget service is independent from the first privacy budget service (i.e., implemented on servers independent from the servers implementing the first privacy budget service), and maintains a second instance of the privacy budget associated with the dataset.

At block 708, the server(s) receive, from the first server, a first response indicating whether there is sufficient privacy budget, according to the first privacy budget service (e.g., event 536). Similarly, at block 710, the server(s) receive, from the second server, a second response indicating whether there is sufficient privacy budget, according to the second privacy budget service (e.g., event 538). Based on the first and second responses, at block 712, the server(s) process the dataset. If both responses indicate that there is sufficient privacy budget, then the processing at block 712 includes analyzing the dataset (e.g., event 524) and storing the results of the analyzing (e.g., event 526). In some implementations, the server(s) may first analyze the dataset and, if both responses indicate that there is sufficient privacy budget, storing the results of the analyzing. If there is sufficient privacy budget to proceed with analyzing and storing the results of the analyzing, then the server(s) cause the first and second privacy budget services to each decrement their respective instance of the privacy budget (e.g., as described with reference to block 606). The first and second privacy budget services decrement their budgets atomically (i.e., either both services will decrement their respective instance of the privacy budget because there is sufficient privacy budget to be consumed, or neither service will decrement their respective instance of the privacy budget). If one or both responses indicate that there is insufficient privacy budget, then the server(s) refrain from analyzing the dataset, or, if the dataset is analyzed before determining that there is insufficient privacy budget, refrain from storing the results of the analyzing.

In some implementations, the method 700 can be combined with aspects of the method 600, such that the dataset may be part of a group of datasets, where a privacy budget is allocated to the group of datasets. The first and second requests to the privacy budget services in such implementations are requests to verify the privacy budget for the group.

### Additional Considerations

The following additional considerations apply to the foregoing discussion.

A client device in which the techniques of this disclosure can be implemented (e.g., the client device 102) can be any suitable device capable of wireless communications such as a smartphone, a tablet computer, a laptop computer, a desktop computer, a mobile gaming console, a point-of-sale (POS) terminal, a health monitoring device, a drone, a camera, a media-streaming dongle or another personal media device, a wearable device such as a smartwatch, a wireless hotspot, a femtocell, or a broadband router. Further, the client device in some cases may be embedded in an electronic system such as the head unit of a vehicle or an advanced driver assistance system (ADAS). Still further, the client device can operate as an internet-of-things (IoT) device or a mobile-internet device (MID). Depending on the type, the client device can include one or more general-purpose processors, a computer-readable memory, a user interface, one or more network interfaces, one or more sensors, etc.

Certain embodiments are described in this disclosure as including logic or a number of components or modules. Modules may be software modules (e.g., code stored on non-transitory machine-readable medium) or hardware modules. A hardware module is a tangible unit capable of performing certain operations and may be configured or arranged in a certain manner. A hardware module can comprise dedicated circuitry or logic that is permanently configured (e.g., as a special-purpose processor, such as a field programmable gate array (FPGA) or an application-specific integrated circuit (ASIC)) to perform certain operations. A hardware module may also comprise programmable logic or circuitry (e.g., as encompassed within a general-purpose processor or other programmable processor) that is temporarily configured by software to perform certain operations. The decision to implement a hardware module in dedicated and permanently configured circuitry, or in temporarily configured circuitry (e.g., configured by software) may be driven by cost and time considerations.

When implemented in software, the techniques can be provided as part of the operating system, a library used by multiple applications, a particular software application, etc. The software can be executed by one or more general-purpose processors or one or more special-purpose processors.

## Claims

1. A method in one or more servers for managing privacy budgets, the method comprising:
receiving (702) a request to analyze a dataset, the dataset associated with a privacy budget corresponding to a number of times the dataset can be analyzed;
transmitting (704), to a first server that implements a first privacy budget service to maintain a first instance of the privacy budget, a first request to determine whether there is sufficient privacy budget to analyze the dataset;
transmitting (706), to a second server that implements a second privacy budget service to maintain a second instance the privacy budget, a second request to determine whether there is sufficient privacy budget to analyze the dataset, wherein the second privacy budget service is independent from the first privacy budget service;
receiving (708), from the first server, a first response indicating whether there is sufficient privacy budget, according to the first privacy budget service;
receiving (710), from the second server, a second response indicating whether there is sufficient privacy budget, according to the second privacy budget service; and
processing (712) the dataset in accordance with the first response and the second response,
wherein the processing includes:
determining that the first response indicates there is sufficient privacy budget and that the second response indicates there is insufficient privacy budget; and
in response to the determining, (i) refraining from analyzing the dataset or (ii) refraining from storing results of analyzing the dataset.

2. The method of claim 1, wherein:
the dataset is included in a group of datasets,
the privacy budget is defined for the group of datasets, and
receiving the request to process the dataset includes receiving a request to process the group of datasets.

3. The method of any one of the preceding claims, wherein transmitting the first request includes:
transmitting the first request via an application programming interface, API, call to the first privacy budget service.

4. A computing system for managing privacy budgets, the computing system comprising:
one or more servers; and
a non-transitory computer-readable medium storing instructions thereon that, when executed by the one or more servers, cause the computing system to:
receive a request to analyze a dataset, the dataset associated with a privacy budget corresponding to a number of times the dataset can be analyzed;
transmit, to a first server that implements a first privacy budget service to maintain a first instance of the privacy budget, a first request to determine whether there is sufficient privacy budget to analyze the dataset;
transmit, to a second server that implements a second privacy budget service to maintain a second instance the privacy budget, a second request to determine whether there is sufficient privacy budget to analyze the dataset, wherein the second privacy budget service is independent from the first privacy budget service;
receive, from the first server, a first response indicating whether there is sufficient privacy budget, according to the first privacy budget service;
receive, from the second server, a second response indicating whether is sufficient privacy budget, according to the second privacy budget service; and
process, based on the first response and the second response, the dataset, wherein
the processing includes:
determining that the first response indicates there is sufficient privacy budget and that the second response indicates there is insufficient privacy budget; and
in response to the determining, (i) refraining from analyzing the dataset or (ii) refraining from storing results of analyzing the dataset.

5. The computing system of claim 4, wherein, to transmit the first request, the instructions cause the computing system to:
transmit the first request via an application programming interface (API) call to the first privacy budget service.

6. A non-transitory computer-readable medium storing instructions thereon that, when executed by the one or more servers of a computing system, cause the computing system to perform the method of any of the claims 1 to 3.

## Patentansprüche

1. Verfahren in einem oder mehreren Servern zum Verwalten von Datenschutzbudgets, wobei das Verfahren umfasst:
Empfangen (702) einer Anforderung, einen Datensatz zu analysieren, wobei der Datensatz einem Datenschutzbudget zugeordnet ist, das einer Anzahl von Malen entspricht, die der Datensatz analysiert werden kann;
Übertragen (704), an einen ersten Server, der einen ersten Datenschutzbudget-Dienst implementiert, um eine erste Instanz des Datenschutzbudgets zu verwalten, einer ersten Anforderung, zu bestimmen, ob ausreichend Datenschutzbudget vorhanden ist, um den Datensatz zu analysieren;
Übertragen (706), an einen zweiten Server, der einen zweiten Datenschutzbudget-Dienst implementiert, um eine zweite Instanz das Datenschutzbudget zu verwalten, einer zweiten Anforderung, zu bestimmen, ob ausreichend Datenschutzbudget vorhanden ist, um den Datensatz zu analysieren, wobei der zweite Datenschutzbudget-Dienst von dem ersten Datenschutzbudget-Dienst unabhängig ist;
Empfangen (708), von dem ersten Server, einer ersten Antwort, die angibt, ob ausreichend Datenschutzbudget vorhanden ist, gemäß dem ersten Datenschutzbudget-Dienst;
Empfangen (710), von dem zweiten Server, einer zweiten Antwort, die angibt, ob ausreichend Datenschutzbudget vorhanden ist, gemäß dem zweiten Datenschutzbudget-Dienst; und
Verarbeiten (712) des Datensatzes in Übereinstimmung mit der ersten Antwort und der zweiten Antwort, wobei das Verarbeiten beinhaltet:
Bestimmen, dass die erste Antwort angibt, dass ausreichend Datenschutzbudget vorhanden ist, und dass die zweite Antwort angibt, dass unzureichend Datenschutzbudget vorhanden ist; und
als Reaktion auf das Bestimmen, (i) Unterlassen des Analysierens des Datensatzes oder (ii) Unterlassen des Speicherns von Ergebnissen des Analysierens des Datensatzes.

2. Verfahren nach Anspruch 1, wobei:
der Datensatz in einer Gruppe von Datensätzen enthalten ist,
das Datenschutzbudget für die Gruppe von Datensätzen definiert ist, und
das Empfangen der Anforderung, den Datensatz zu verarbeiten, das Empfangen einer Anforderung, die Gruppe von Datensätzen zu verarbeiten, beinhaltet.

3. Verfahren nach einem der vorhergehenden Ansprüche, wobei das Übertragen der ersten Anforderung beinhaltet:
Übertragen der ersten Anforderung über einen Anwendungsprogrammierschnittstellen(API)-Aufruf an den ersten Datenschutzbudget-Dienst.

4. Rechensystem zum Verwalten von Datenschutzbudgets, wobei das Rechensystem umfasst:
einen oder mehrere Server; und
ein nichtflüchtiges computerlesbares Medium, das Anweisungen darauf speichert, die, wenn sie von dem einen oder den mehreren Servern ausgeführt werden, das Rechensystem veranlassen zum:
Empfangen einer Anforderung, einen Datensatz zu analysieren, wobei der Datensatz einem Datenschutzbudget zugeordnet ist, das einer Anzahl von Malen entspricht, die der Datensatz analysiert werden kann;
Übertragen, an einen ersten Server, der einen ersten Datenschutzbudget-Dienst implementiert, um eine erste Instanz des Datenschutzbudgets zu verwalten, einer ersten Anforderung, zu bestimmen, ob ausreichend Datenschutzbudget vorhanden ist, um den Datensatz zu analysieren;
Übertragen, an einen zweiten Server, der einen zweiten Datenschutzbudget-Dienst implementiert, um eine zweite Instanz das Datenschutzbudget zu verwalten, einer zweiten Anforderung, zu bestimmen, ob ausreichend Datenschutzbudget vorhanden ist, um den Datensatz zu analysieren, wobei der zweite Datenschutzbudget-Dienst von dem ersten Datenschutzbudget-Dienst unabhängig ist;
Empfangen, von dem ersten Server, einer ersten Antwort, die angibt, ob ausreichend Datenschutzbudget vorhanden ist, gemäß dem ersten Datenschutzbudget-Dienst;
Empfangen, von dem zweiten Server, einer zweiten Antwort, die angibt, ob ausreichend Datenschutzbudget vorhanden ist, gemäß dem zweiten Datenschutzbudget-Dienst; und
Verarbeiten, basierend auf der ersten Antwort und der zweiten Antwort, des Datensatzes, wobei das Verarbeiten beinhaltet:
Bestimmen, dass die erste Antwort angibt, dass ausreichend Datenschutzbudget vorhanden ist, und dass die zweite Antwort angibt, dass unzureichend Datenschutzbudget vorhanden ist; und
als Reaktion auf das Bestimmen, (i) Unterlassen des Analysierens des Datensatzes oder (ii) Unterlassen des Speicherns von Ergebnissen des Analysierens des Datensatzes.

5. Rechensystem nach Anspruch 4, wobei zum Übertragen der ersten Anforderung die Anweisungen das Rechensystem zu Folgendem veranlassen:
Übertragen der ersten Anforderung über einen Anwendungsprogrammierschnittstellen(API)-Aufruf an den ersten Datenschutzbudget-Dienst.

6. Nichtflüchtiges computerlesbares Medium, das Anweisungen darauf speichert, die, wenn sie von dem einen oder den mehreren Servern eines Rechensystems ausgeführt werden, das Rechensystem veranlassen, das Verfahren nach einem der Ansprüche 1-3 durchzuführen.

## Revendications

1. Procédé sur un ou plusieurs serveurs de gestion des budgets de confidentialité, le procédé comprenant :
la réception (702) d'une requête d'analyse d'un ensemble de données, l'ensemble de données associé à un budget de confidentialité correspondant à un nombre de fois où l'ensemble de données peut être analysé ;
la transmission (704), à un premier serveur qui met en place un premier service de budget de confidentialité pour maintenir une première instance du budget de confidentialité, d'une première requête pour déterminer s'il existe un budget de confidentialité suffisant pour analyser l'ensemble de données ;
la transmission (706), à un second serveur qui met en place un second service de budget de confidentialité pour maintenir une seconde instance du budget de confidentialité, d'une seconde requête pour déterminer s'il existe un budget de confidentialité suffisant pour analyser l'ensemble de données, dans lequel le second service de budget de confidentialité est indépendant du premier service de budget de confidentialité ;
la réception (708), en provenance du premier serveur, d'une première réponse indiquant s'il existe un budget de confidentialité suffisant, selon le premier service de budget de confidentialité ;
la réception (710), en provenance du second serveur, d'une seconde réponse indiquant si le budget de confidentialité est suffisant, selon le second service de budget de confidentialité ; et
le traitement (712) de l'ensemble de données conformément à la première réponse et à la seconde réponse, dans lequel le traitement comporte :
la détermination que la première réponse indique un budget de confidentialité suffisant et que la seconde réponse indique un budget de confidentialité insuffisant ; et
en réponse à la détermination, (i) s'abstenir d'analyser l'ensemble de données ou (ii) s'abstenir de stocker les résultats de l'analyse de l'ensemble de données.

2. Procédé selon la revendication 1, dans lequel :
l'ensemble de données est inclus dans un groupe d'ensembles de données,
le budget de confidentialité est défini pour le groupe d'ensembles de données, et
la réception de la requête de traitement de l'ensemble de données comporte la réception d'une requête de traitement du groupe d'ensembles de données.

3. Procédé selon l'une quelconque des revendications précédentes, dans lequel la transmission de la première requête comporte :
la transmission de la première requête via un appel à une interface de programmation d'application, API, vers le premier service de budget de confidentialité.

4. Système informatique de gestion des budgets de confidentialité, le système informatique comprenant :
un ou plusieurs serveurs ; et
un support non transitoire lisible par ordinateur stockant des instructions qui, lorsqu'elles sont exécutées par les un ou plusieurs serveurs, amènent le système informatique à :
recevoir une requête d'analyse d'un ensemble de données, l'ensemble de données associé à un budget de confidentialité correspondant à un nombre de fois où l'ensemble de données peut être analysé ;
transmettre, à un premier serveur qui met en place un premier service de budget de confidentialité pour maintenir une première instance du budget de confidentialité, une première requête pour déterminer s'il existe un budget de confidentialité suffisant pour analyser l'ensemble de données ;
transmettre, à un second serveur qui met en place un second service de budget de confidentialité pour maintenir une seconde instance du budget de confidentialité, une seconde requête pour déterminer s'il existe un budget de confidentialité suffisant pour analyser l'ensemble de données, dans lequel le second service de budget de confidentialité est indépendant du premier service de budget de confidentialité ;
recevoir, en provenance du premier serveur, une première réponse indiquant s'il existe un budget de confidentialité suffisant, selon le premier service de budget de confidentialité ;
recevoir, en provenance du second serveur, une seconde réponse indiquant si le budget de confidentialité est suffisant, selon le second service de budget de confidentialité ; et
traiter, sur la base de la première et de la seconde réponse, l'ensemble de données, dans lequel le traitement comporte :
la détermination que la première réponse indique un budget de confidentialité suffisant et que la seconde réponse indique un budget de confidentialité insuffisant ; et
en réponse à la détermination, (i) s'abstenir d'analyser l'ensemble de données ou (ii) s'abstenir de stocker les résultats de l'analyse de l'ensemble de données.

5. Système informatique selon la revendication 4, dans lequel, pour transmettre la première requête, les instructions amènent le système informatique à :
transmettre la première requête via un appel à une interface de programmation d'application (API) vers le premier service de budget de confidentialité.

6. Support non transitoire lisible par ordinateur stockant des instructions qui, lorsqu'elles sont exécutées par l'un ou plusieurs serveurs d'un système informatique, amènent le système informatique à réaliser le procédé selon l'une quelconque des revendications 1 à 3.
